# EUROPÄISCHE PATENTSCHRIFT

(11) **EP 2 307 779 B1**
(45) Veröffentlichungstag und Bekanntmachung des Hinweises auf die Patenterteilung: **05.09.2012**
(21) Anmeldenummer: 09777166.1
(22) Anmeldetag: 14.07.2009
(51) Int. Cl.: F16L 3/237

(54) **SCHIEBEELEMENT ZUR ÜBERTRAGUNG EINER SCHIEBEKRAFT AUF EIN ROHRANSCHLUSSELEMENT UND VERBINDUNGSWERKZEUG**
SLIDE ELEMENT FOR TRANSMITTING A SLIDING FORCE TO A PIPE-CONNECTING ELEMENT, AND CONNECTING TOOL
ÉLÉMENT COULISSANT POUR TRANSFÉRER UNE FORCE DE COULISSEMENT SUR UN ÉLÉMENT DE RACCORD DE TUYAU ET OUTIL D ASSEMBLAGE

(30) Priorität: 26.07.2008 DE 202008010080 U
(43) Veröffentlichungstag der Anmeldung: 13.04.2011
(73) Patentinhaber: Rehau AG + Co, 95111 Rehau (DE)
(72) Erfinder: SAPPER, Richard, 91126 Schwabach (DE)
(86) Internationale Anmeldenummer: PCT/EP2009/005092
(87) Internationale Veröffentlichungsnummer: WO 2010/012374

(56) Entgegenhaltungen:
- EP-A1- 2 031 289
- US-A- 1 519 018
- US-A1- 2002 117 850

## Beschreibung

### Hintergrund der Erfindung

Die vorliegende Erfindung betrifft ein Schiebeelement zur Übertragung einer Schiebekraft auf ein Rohranschlusselement.

Schiebeelemente, wie beispielsweise bekannte Verpressjoche, kommen insbesondere dort zum Einsatz wo eine Pressverbindung zwischen einem Rohranschlusselement bzw. einem Fitting und einem Rohr herzustellen ist, wobei zur Schaffung dieser Verbindung meist zwei an dem Rohr angeordnete Schiebeelemente mittels eines Werkzeugs aufeinander zu bewegt werden, um eine Schiebehülse auf einen zuvor aufgeweiteten Endabschnitt des Rohrs aufzuschieben und einen Einschiebeabschnitt des Fittings bzw. des Rohranschlusselements in den aufgeweiteten Endabschnitt hinein zu schieben. Hierbei liegt eins der beiden Schiebeelemente mit seiner Anschlagfläche an einer Stirnseite der Schiebehülse an und das andere Schiebeelement liegt mit seiner Anschlagfläche meist an einem Fittingkragen des Fittings bzw. des Rohranschlusselements an. Durch Aufeinander zu Bewegen der Schiebeelemente kann dann eine übliche Pressverbindung geschaffen werden, bei welcher der Einschiebeabschnitt des Fittings in den aufgeweiteten Endabschnitt des Rohrs eingeschoben ist und die Schiebehülse auf den aufgeweiteten Endabschnitt aufgeschoben ist.

Bekannte Schiebeelemente z.B. in Form von Schiebebacken/Jochaufnahmen umfassen meist die folgenden bekannten zwei Varianten:

### Erste Variante:

Um die Materialkosten bei den Verbindungskomponenten zu minimieren ist man bestrebt die äußeren Abmessungen so klein wie möglich zu halten. Es sind daher Systeme bekannt, die speziell auf die einzelnen Verbindungskomponenten abgestimmt sind. So gibt es z.B. eine fittingseitige Jochaufnahme u. eine rohrseitige Aufnahme, welche jeweils die meist minimalen geometrischen Abmessungen exakt aufnehmen und somit eine max. Zentrierwirkung an den Verbindungskomponenten erreichen.

Von Nachteil ist hierbei, dass ein wechselseitiges Ansetzen der Jochaufnahme nicht möglich ist, so dass das Werkzeug in einer Zwangsposition angesetzt werden muss. Die Zwangsposition macht eine aufwendige Jochkennzeichnung erforderlich, mit der unter Umständen Anwendungsfehler einhergehen.

### Zweite Variante:

Jochaufnahmen bzw. Schiebebacken bei Axialpressmaschinen sind speziell auf den Durchmesser abgestimmt. Selbst bei geringen Durchmesserunterschieden und damit Nennweiten (z.B. 16 und 17 mm) werden zur Erzielung einer hinreichenden Zentrierwirkung separate Joche verwendet. Ein wechselseitiges Einsetzen der Joche ist hier jedoch möglich. Von Nachteil bei dieser Variante ist, dass ein hinreichende Zentrierwirkung bei geringen Durchmesserunterschieden der Verbindungskomponenten nicht mehr gegeben ist, so dass bei nicht hinreichender bzw. ausreichender Zentrierung der Komponenten durch die Krafteinleitung beim Montagevorgang ein Verkanten oder eine Überbelastung der Aufnahme bzw. Schieberelemente bis zum Versagen nicht ausgeschlossen werden. Aus diesem Grund müssen die äußeren Abmessungen der Verbindungskomponenten gleich gestaltet werden. Dies erhöht den Materialanteil und damit die Materialkosten.

Darüber hinaus beschreibt die US 2002/117850 A1 eine Befestigungsvorrichtung zur Befestigung eines Rohres an einer Kühlschranksystemkomponente, die einen Verbindungsblock und einen Clip umfasst, wobei der Clip in eine U-förmige Ausnehmung in im Wesentlichen senkrechter Richtung zur Achse des Verbindungsblocks in den Block eingesetzt wird. Die Seite des Verbindungsblocks, in die der Clip eingesetzt wird, ist einseitig geöffnet und weist eine Anschlagfläche auf. Von der Anschlagfläche erstreckt sich eine dreidimensionale Zentrierfläche, mit der ein Bereich einer Außenfläche eines Rohranschlusselements, der einen Querschnitt rechtwinklig zur zentralen Längsachse des Rohranschlusselements und eine kreisförmigen Verlauf aufweist, zentrisch in Bezug auf das Rohr ausgerichtet wird. Die Zentrierfläche besitzt in einem Querschnitt rechtwinklig zur zentralen Längsachse der Öffnung einen Verlauf, der einen kreisbogenförmigen Abschnitt und zwei an die jeweiligen Enden des kreisbogenförmigen Abschnitts angrenzende Schenkel aufweist:

### Zugrundeliegende Aufgabe

Der vorliegenden Erfindung liegt daher die Aufgabe zugrunde, ein Schiebeelement zur Übertragung einer Schiebekraft auf ein Rohranschlusselement anzugeben, das im Vergleich zu bekannten Schiebeelementen auf praktische und einfache Weise eine hinreichende Zentrierung von wenigstens zwei Rohranschlusselementen ermöglicht, bei denen die Abschnitte, welche die zu zentrierenden Außenflächenbereiche aufweisen, unterschiedlich große Außendurchmesser aufweisen.

### Erfindungsgemäße Lösung

Diese Aufgabe ist erfindungsgemäß mit einem Schiebeelement zur Übertragung einer Schiebekraft auf ein Rohranschlusselement gelöst, wobei das Rohranschlusselement dafür vorgesehen ist, wenigstens abschnittsweise auf einen Rohrbereich eines Rohrs aufgeschoben zu werden oder wenigstens abschnittsweise in das Rohr hineingeschoben zu werden, wobei das Schiebeelement eine zylinderförmige Öffnung mit einer zentralen Längsachse aufweist, wobei das Schiebeelement wenigstens eine Anschlagfläche mit einer Aussparung aufweist, wobei die Aussparung zur Anordnung eines Abschnitts des Rohres in der Aussparung oder zur Anordnung eines Abschnitts des Rohranschlusselements in der Aussparung vorgesehen ist, und wobei das Schiebeelement wenigstens eine sich von der Anschlagfläche erstreckende, vorzugsweise zusammenhängende dreidimensionale Zentrierfläche aufweist, die dafür vorgesehen ist, einen Außenflächenbereich des Rohranschlusselements, der in einem Querschnitt rechtwinkelig zu einer zentralen Längsachse des Rohranschlusselements einen kreisförmigen Verlauf aufweist, zentrisch in Bezug auf das Rohr auszurichten, wobei die Zentrierfläche in einem Querschnitt rechtwinkelig zu der zentralen Längsachse der zylinderförmigen Öffnung einen Verlauf aufweist, der einen kreisbogenförmigen Abschnitt, zwei an die jeweiligen Enden des kreisbogenförmigen Abschnitts angrenzende Schenkel, die sich von den Enden des kreisbogenförmigen Abschnitts voneinander entfernend erstrecken, und zwei an die jeweiligen Enden der Schenkel angrenzende geradlinige Endschenkel aufweist, die parallel zueinander und spiegelsymmetrisch zu einer geradlinigen Teilungslinie verlaufen, die den Mittelpunktswinkel des kreisbogenförmigen Abschnitts in zwei gleich große Teilwinkel aufteilt.

Die erfindungsgemäße Zentrierfläche ist dafür vorgesehen einen Außenflächenbereich des Rohranschlusselements, der in einem Querschnitt rechtwinkelig zu einer zentralen Längsachse des Rohranschlusselements einen kreisförmigen Verlauf aufweist - also einen Außenflächenbereich, der an einem Abschnitt des Rohranschlusselements ausgebildet ist, das einen gleichbleibenden Außendurchmesser aufweist - zentrisch oder im Wesentlichen zentrisch in Bezug auf das Rohr auszurichten. Auf diese Weise kann letztlich das wenigstens abschnittsweise rotationssymmetrisch um eine zentrale Längsachse ausgebildete Rohranschlusselement zentrisch in Bezug auf das Rohr ausgerichtet werden, also so ausgerichtet werden, das die zentrale Längsachse des Rohranschlusselements mit der einer zentralen Längsachse des Rohrs fluchtet bzw. im Wesentlichen fluchtet. Die zentrische Ausrichtung erfolgt erfindungsgemäß durch eine durch die Zentrierfläche bewirkte Führung des Außenflächenbereichs in die zentrische Ausrichtung.

Das Rohranschlusselement kann insbesondere ein Fitting bzw. eine Fittingkomponente sein oder ein Rohranschlusselement sein, das wenigstens abschnittsweise kreiszylinderförmig ausgebildet ist bzw. wenigstens abschnittsweise in Form eines geraden Kreiszylinders ausgebildet oder das wenigstens abschnittsweise in Form eines geraden Hohlzylinders mit kreisringförmiger Querschnittsfläche ausgebildet ist, wobei das Rohranschlusselement hierbei beispielsweise eine bekannte Schiebehülse oder Presshülse sein kann, die in der Rohrverbindungstechnik als Verbindungskomponente zur Herstellung bzw. Schaffung einer Pressverbindung zwischen einem Rohr und einer Anschlusskomponente, wie einem Fitting, eingesetzt wird. Das Schiebeelement kann aus einem metallischen Material, wie beispielsweise Aluminium oder Stahl bestehen. Es kann aber auch aus einem stabilen Kunststoffmaterial bestehen, das dazu ausgebildet ist, die einwirkenden Schiebekräfte ohne wesentliche nachteilige Verformungen aufzunehmen.

Erfindungsgemäß kann ein Abschnitt eines Rohranschlusselements, der einen zu zentrierenden Außenflächenbereich aufweist, einen Außendurchmesser aufweisen, der zu Erzielung einer wirksamen Zentrierung auf den Durchmesser des kreisbogenförmigen Abschnitts abgestimmt ist - also nur geringfügig kleiner ist als der Durchmesser des kreisbogenförmigen Abschnitts, wobei die Abweichung vorzugsweise innerhalb eines Bereichs 0,2 % bis 3,5 % liegen kann. Auf diese Weise kann der Außenflächenbereich zur Zentrierung desselben in Bezug auf das Rohr wenigstens teilweise an den kreisbogenförmigen Abschnitt zur Anlage gebracht werden.

Infolge der zwei an die jeweiligen Enden des kreisbogenförmigen Abschnitts angrenzenden Schenkel, die sich von den Enden des kreisbogenförmigen Abschnitts voneinander entfernend erstrecken, sind die Endschenkel, welche an die jeweiligen Enden dieser Schenkel angrenzen, unter einem Abstand voneinander beabstandet, der größer ausgebildet ist als der Durchmesser des kreisbogenförmigen Abschnitts. Ein Rohranschlusselement bei dem der Außendurchmesser des Abschnitts, der den in Bezug auf das Rohr zentrisch auszurichtenden Außenflächenbereich aufweist, auf den Abstand der beiden Endschenkel abgestimmt ist (also ein Außendurchmesser, der nur geringfügig kleiner ist als der Abstand der beiden Endschenkel, wobei die Abweichung vorzugsweise innerhalb eines Bereichs 0,1 % bis 1,0 % liegen kann) kann hierbei ohne bestehenden Kontakt zu dem kreisförmigen Abschnitt wirksam in Bezug auf das Rohr zentriert werden, und zwar infolge der zentrierenden Wirkung der beiden Endschenkel.

Ein Kontakt des zentrisch auszurichtenden Außenflächenbereichs zu dem kreisbogenförmigen Abschnitt ist infolge des gegenüber dem Durchmesser des kreisbogenförmigen Abschnitts vergrößertem Außendurchmesser nicht möglich. Erfindungsgemäß wird somit eine Führung der Aussendruchmesser der Rohranschlusselemente bereitgestellt, die eine genaue Zentrierung ermöglicht.

Insgesamt gesehen ermöglicht der erfindungsgemäße Verlauf der Zentrierfläche in einem Querschnitt rechtwinkelig zu der zentralen Längsachse der zylinderförmigen Öffnung eine hinreichende Zentrierung von wenigstens zwei unterschiedlichen Rohranschlusselementen bei denen die Abschnitte, welche die auszurichtenden Außenflächenbereiche aufweisen, unterschiedlich große Außendurchmesser aufweisen, so dass das erfindungsgemäße Schiebeelement für wenigstens zwei unterschiedlich gestaltete Rohranschlusselemente verwendbar ist.

Erfindungsgemäß werden zwei unterschiedliche Zentrierpositionen für Rohranschlusselemente bereitgestellt. Bei einer der beiden Positionen, die für ein Rohranschlusselement vorgesehen ist, bei dem der Außendurchmesser des Abschnitts des Rohranschlusselements, der den zentrisch auszurichtenden Außenflächenbereich aufweist, auf den Durchmesser des kreisbogenförmigen Abschnitts abgestimmt ist, weist der Außenflächenbereich wenigstens teilweise einen Kontakt zu dem kreisbogenförmigen Abschnitt auf. Bei der anderen der beiden Positionen, die für ein Rohranschlusselement vorgesehen ist, bei dem der Außendurchmesser des Abschnitts, der den zentrisch auszurichtenden Außenflächenbereich aufweist, auf den Abstand der beiden Endschenkel abgestimmt ist, besteht kein Kontakt des Außenflächenbereichs zu dem kreisbogenförmigen Abschnitt. Erfindungsgemäß lassen sich somit im Unterschied zu bekannten Lösungen mit nur einem Schiebeelement wenigstens zwei Rohranschlusselemente hinreichend in Bezug auf das Rohr zentrieren, deren zu zentrierende Außenflächenbereiche an Abschnitten mit unterschiedlich großen Außendurchmessern ausgebildet sind, und zwar vorzugsweise schon vor Übertragung bzw. Einwirkung einer Schiebekraft auf das Schiebeelement mit einer einhergehenden Verschiebung des Rohranschlusselements in die erwünsche Position. Durch die erfindungsgemäß bereitgestellte Selbstzentrierung der Verbindungskomponenten können Ansetzfehler durch den Anwender automatisch ausgeschlossen werden. Geringe Außendurchmesserunterschiede der Verbindungskomponenten werden nahezu automatisch ausgeglichen. Damit kann eine kostenintensive Vereinheitlichung von Fittingkomponenten bzw. Rohranschlusselementen entfallen, wobei die Schiebeelemente auch wechselseitig eingesetzt werden können.

Über die erfindungsgemäße Anschlagfläche, die auch in Form einer ebenen Anschlagfläche ausgebildet sein kann, erfolgt die Übertragung einer auf das Schiebeelement einwirkenden Schiebekraft auf das Rohranschlusselement, wobei das Rohranschlusselement hierbei vorzugsweise eine rechtwinkelig zur Längserstreckung des Rohranschlusselements angeordnete Kraftübertragungsfläche, wie etwas einer Stirnseite, aufweist, die an die Anschlagfläche angelegt wird bzw. ein Kontakt mit dieser bereitgestellt wird. Die Schiebekraft kann hierbei beispielsweise über eine geeignet ausgebildete Schiebevorrichtung in das Schiebeelement eingeleitet werden. Die Kraftübertragungsfläche kann insbesondere eine typische Anlagefläche eines Fittingkragens eines Fittings bzw. einer Fittingkomponente sein. Insbesondere kann die Kraftübertragungsfläche auch eine Stirnseite einer Schiebehülse oder einer Presshülse sein.

Die Anschlagfläche weist eine Aussparung auf die zur Anordnung eines Abschnitts des Rohres in der Aussparung oder zur Anordnung eines Abschnitts des Rohranschlusselements in der Aussparung vorgesehen ist. Die Aussparung bildet somit erfindungsgemäß ein typisches Joch in welches ein Rohrabschnitt bzw ein Abschnitt eines Rohranschlusselements angeordnet wird, um nachfolgend eine Zentrierung und Übertragung der Schiebekraft vornehmen zu können. Erfindungsgemäß ist eine Anordnung eines Abschnitts des Rohrs in der Aussparung vorzugsweise dann vorgesehen, wenn ein Rohranschlusselement, wie beispielsweise eine Schiebehülse oder eine Presshülse wenigstens abschnittsweise auf einen Rohrbereich des Rohrs aufgeschoben werden soll. Ferner ist erfindungsgemäß eine Anordnung eines Abschnitts des Rohranschlusselements in der Aussparung vorzugsweise dann vorgesehen, wenn ein Rohranschlusselement wenigstens abschnittsweise in das Rohr hineingeschoben werden soll, wobei dieser Abschnitt an den Abschnitt des Rohranschlusselements angrenzt, der den Außenflächenbereich aufweist, der zentrisch in Bezug auf das Rohr auszurichten ist.

Die erfindungsgemäß vorgesehene zylinderförmige Öffnung, die vorzugsweise in Form eines geraden Kreiszylinders ausgebildet ist, ist vorzugsweise zur ortsfesten Aufnahme eines Abschnitts einer Haltevorrichtung für das Schiebeelement vorgesehen, der vorzugsweise eine an die Öffnung angepasste Form aufweist bzw. vorzugsweise in Form eines geraden Kreiszylinders ausgebildet ist.

Die Haltevorrichtung kann insbesondere dafür vorgesehen sein, das Schiebeelement in einer geradlinigen Richtung bzw. im Wesentlichen geradlinigen Richtung längsbeweglich zu führen. Ein erfindungsgemäßes Schiebeelement, das mittels der Haltevorrichtung längsbeweglich geführt ist, ermöglicht eine sehr präzise Krafteinleitung der Schiebekraft, die zur Verbindung des Rohranschlusselements mit dem Rohr aufzubringen ist.

Bei einer bevorzugten Ausführungsform weist der Mittelpunktswinkel eine Größe auf, die innerhalb eines Bereichs von 70° bis 170° liegt, wobei eine Größe von 120° besonders bevorzugt ist. Die Endschenkel weisen bevorzugt einen Abstand zueinander auf, der innerhalb eines Bereichs von 8mm bis 250mm liegt.

Bei einer weiteren bevorzugten Ausführungsform weist der kreisbogenförmige Abschnitt einen Radius auf, der innerhalb eines Bereichs von 4mm bis 125mm liegt.

Die parallelen Endschenkel weisen bevorzugt eine Länge auf, die innerhalb eines Bereichs von 2mm bis 100mm liegt. Jeder der beiden Schenkel, die an die jeweiligen Enden des kreisbogenförmigen Abschnitts angrenzen, weist bevorzugt eine Länge auf, die innerhalb eines Bereichs von 1 mm bis 70mm liegt.

Bei einer praktischen Ausführungsform ist die Zentrierfläche rechtwinkelig zu der Anschlagfläche angeordnet.

Bei einer weiteren praktischen Ausführungsform weist die Anschlagfläche wenigstens einen Bereich mit einer Normalen auf, wobei die Normale des Bereichs mit einer Normalen zu der Zentrierfläche einen Winkel einschließt , der innerhalb eines Bereichs von 85° bis 90° oder innerhalb eines Bereichs von 87° bis 90° liegt. Hierbei ist der Bereich von 87° bis 90° besonders bevorzugt.

Durch die so erfindungsgemäß bereitgestellte Neigung wenigstens eines Bereichs der Anschlagfläche zu der Zentrierfläche - wobei der Bereich vorzugsweise eben ausgebildet sein kann und auch an die Zentrierfläche angrenzen kann - kann übermäßigen Dehnungen bzw. Verbiegungen des Schiebeelements, welches meist hohe Schiebekräfte überträgt, derart vorgebeugt werden, dass infolge der erfindungemäßen Neigung nach Aufnahme des jeweiligen Rohranschlusselements eine Vorspannung in dem Schiebeelement bereitgestellt wird, die nachteiligen übermäßigen Dehnungen bzw. Verbiegungen während der Übertragung der Schiebekraft entgegenwirkt.

Bei einer besonders praktischen Ausführungsform weist das Schiebeelement wenigstens eine vorzugsweise zusammenhängende dreidimensionale Führungsfläche auf, die als Einführschräge vorgesehen ist, wobei die Führungsfläche vorzugsweise entlang des gesamten Verlaufs der Zentrierfläche an diese angrenzt Mittels der erfindungsgemäßen Führungsfläche, die als Einführschräge vorgesehen ist, kann ein eventuell zur Verkantung führendes Anlegen des Rohranschlusselements an die Anschlagfläche, also eine Anordnung bei der die Längsachsen des Rohranschlusselements und des Rohrs deutlich geneigt bzw. windschief zueinander verlaufen, vermieden werden, derart, dass das Rohranschlusselement mittels der Führungsfläche in eine der beiden obigen Zentrierpositionen, die eine hinreichende Zentrierung in Bezug auf das Rohr ermöglichen, überführt wird.

Vorzugsweise schließt hierbei eine Normale der Führungsfläche mit einer Normalen der Zentrierfläche einen spitzen Winkel ein, der innerhalb eines Bereichs von 3° bis 89° liegt oder innerhalb eines Bereichs von 30° bis 45° liegt, wobei ein spitzer Winkel innerhalb des Bereichs von 30° bis 45° besonders bevorzugt ist.

Die Erfindung betrifft ferner ein Verbindungswerkzeug zur Schaffung einer Verbindung zwischen einem Rohranschlusselement und einem aufgeweiteten Endabschnitt eines Rohrs, wobei bei der Verbindung eine Schiebhülse auf den aufgeweiteten Endabschnitt aufgeschoben und wenigstens ein Endabschnitt des Rohranschlusselements in den aufgeweiteten Endabschnitt des Rohrs hineingeschoben ist, wobei das Verbindungswerkzeug ein erstes und ein zweites erfindungsgemäßes Schiebeelement (nach einem der Ansprüche 1 bis 10) und eine Verschiebevorrichtung aufweist, die ein erstes und ein zweites Element umfasst, die geradlinig voneinander weg und aufeinander zu verschiebbar sind, wobei ein Abschnitt des ersten Elements in der zylinderförmigen Öffnung des ersten Schiebeelements ortsfest aufgenommen ist, und wobei ein Abschnitt des zweiten Elements in der zylinderförmigen Öffnung des zweiten Schiebeelements ortsfest aufgenommen ist, und wobei das erste Schiebeelement dafür vorgesehen ist, eine Schiebkraft auf die auf das Rohr aufgeschobene Schiebehülse zu übertragen, um diese auf den aufgeweiteten Endabschnitt zu schieben, und wobei das zweite Schiebeelement dafür vorgesehen ist, eine Schiebekraft auf das Rohranschlusselement zu übertragen, um wenigstens einen Endabschnitt des Rohranschlusselements in den aufgeweiteten Endabschnitt des Rohrs hineinzuschieben, wobei ferner eine an die Verschiebevorrichtung gekoppelte Verschiebeeinheit vorgesehen ist, die dazu eingerichtet ist, das erste und das zweite Element zur Schaffung der Verbindung aufeinander zu zu bewegen.

Durch Verwendung des erfindungsgemäßen Verbindungswerkzeugs kann auf praktische Weise eine stabile Verbindung in Form einer Pressverbindung zwischen einem Rohranschlusselement und einem aufgeweiteten Endabschnitt eines Rohrs unter Verwendung einer Schiebhülse geschaffen werden, wobei das Verbindungswerkzeug aufgrund des erfindungsgemäßen Verlaufs der Zentrierflächen der Schiebeelemente zur Schaffung von wenigstens zwei Verbindungen mit unterschiedlich dimensionierten Rohranschlusselementen bzw. unterschiedlich dimensionierten Schiebehülsen ausgebildet ist.

### Kurzbeschreibung der Zeichnungen

Nachfolgend werden Ausführungsbeispiele der Erfindung anhand der beigefügten Zeichnungen näher erläutert. Es zeigen:
- Fig. 1A bis 1 D: eine dreidimensionale Darstellung eines Schiebeelements mit zwei Anschlagflächen, zusammen mit einer Aufsicht, einer Unteransicht und einer Schniftansicht des Schiebeelements,
- Fig. 2: zwei schematische Aufsichten auf jeweils eine Anschlagfläche eines Schiebeelements,
- Fig. 3: eine schematische Schnittsansicht eines Ausführungsbeispiels eines erfindungsgemäßen Verschiebungswerkzeugs,
- Fig. 4A bis 4H: eine dreidimensionale Darstellung eines Schiebeelements mit zwei Anschlagflächen, zusammen mit einer Aufsicht, einer Unteransicht, zwei Schnittansichten und vergrößerten Detaildarstellungen des Schiebeelements,
- Fig. 5A bis 5G: eine dreidimensionale Darstellung eines Schiebeelements mit zwei Anschlagflächen, zusammen mit einer Aufsicht, einer Unteransicht, einer Schnittansicht und vergrößerten Detaildarstellungen des Schiebeelements,
- Fig. 6A bis 6E: Darstellungen eines Schiebeelements mit einer Anschlagfläche, umfassend eine Aufsicht, eine Unteransicht, eine Seitenansicht, eine Schnittansicht und eine vergrößerte Detaildarstellung,
- Fig. 7A bis 7E: Darstellungen eines Schiebeelements mit einer Anschlagfläche, umfassend eine Aufsicht, eine Unteransicht, eine Seitenansicht, eine Schnittansicht und eine vergrößerte Detaildarstellung,
- Fig. 8A bis 8E: Darstellungen eines Schiebeelements mit einer Anschlagfläche, umfassend eine Aufsicht, eine Unteransicht, eine Seitenansicht, eine Schnittansicht und eine vergrößerte Detaildarstellung, und
- Fig. 9A bis 9E: Darstellungen eines Schiebeelements mit einer Anschlagfläche, umfassend eine Aufsicht, eine Unteransicht, eine Seitenansicht, eine Schnittansicht und eine vergrößerte Detaildarstellung.

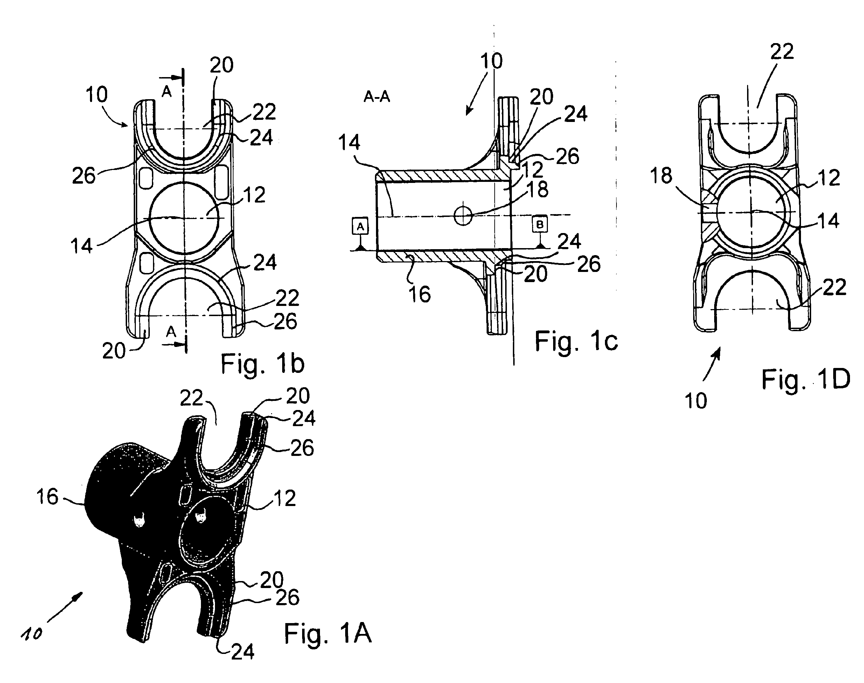

Die Fig. 1A bis 1D zeigen Darstellungen eines Ausführungsbeispiels eines erfindungsgemäßen Schiebeelements. Wie insbesondere aus der dreidimensionalen Darstellung (vgl. Fig. 1A) und der Aufsicht (vgl. Fig. 1B) ersichtlich weist das Schiebeelement 10 eine kreiszylinderförmige Öffnung 12 mit einer zentralen Längsachse auf 14, die zur Aufnahme eines Abschnitts einer Haltevorrichtung oder eines Elements der Verschiebevorrichtung des erfindungsgemäßen Verbindungswerkzeugs vorgesehen ist. Die dargestellte Öffnung 12, die im Längsschnitt in der in Fig. 1C dargestellten Schnittansicht entlang der Schnittlinie A-A der Fig. 1 B dargestellt ist, weist typischerweise einen Durchmesser auf, der innerhalb eines Bereichs von ca. 28 mm bis 32 mm liegt. Die Länge der Öffnung 12 kann 20 bis 70 mm betragen. Wie auch aus der Unteransicht (vgl. Fig. 1D) ersichtlich ist in der die kreiszylinderförmige Öffnung 12 begrenzenden Wandung 16 eine Durchgangsöffnung 18 ausgebildet, die sich durchgehend bis in die kreiszylinderförmige Öffnung 12 erstreckt, wobei die Durchgangsöffnung 18 zur abschnittsweisen Aufnahme eines Fixierungsmittels bzw. eines Verbindungsmittels (nicht dargestellt) vorgesehen ist, das dazu dient eine ortsfeste Aufnahme eines Abschnitts einer Haltevorrichtung oder eines Abschnitts eines Elements der Verschiebevorrichtung des erfindungsgemäßen Verbindungswerkzeugs in der Öffnung 12 bereitzustellen, wobei sich das Fixierungsmittel vorzugsweise auch bis in eine in der Haltevorrichtung bzw. dem Element ausgebildete Öffnung oder Vertiefung erstreckt, um eine ortsfeste Aufnahme bereitzustellen.

Das Schiebeelement 10 weist ferner zwei Anschlagflächen 20 mit jeweils einer Aussparung 22 auf, wobei die Aussparung 22 zur Anordnung eines Abschnitts eines Rohres, das mit einem Rohranschlusselement mittels des Schiebeelements 10 zu verbinden ist, in der Aussparung 22 oder zur Anordnung eines Abschnitts eines Rohranschlusselements in der Aussparung 22 vorgesehen ist. Die Aussparung 22 bildet ein typisches Joch in welches ein Rohrabschnitt bzw. ein Abschnitt eines Rohranschlusselements angeordnet wird, um nachfolgend eine Zentrierung und Übertragung der Schiebekraft vornehmen zu können. Eine Anordnung eines Abschnitts des Rohrs in der Aussparung 22 ist vorzugsweise dann vorgesehen, wenn ein Rohranschlusselement wenigstens abschnittsweise auf einen Rohrbereich des Rohrs aufgeschoben werden soll. Eine Anordnung eines Abschnitts des Rohranschlusselements in der Aussparung ist vorzugsweise dann vorgesehen, wenn ein Rohranschlusselement wenigstens abschnittsweise in das Rohr hineingeschoben werden soll, wobei dieser Abschnitt des Rohranschlusselements an den Abschnitt angrenzt, der den Außenflächenbereich aufweist, der zentrisch in Bezug auf das Rohr auszurichten ist.

Weiterhin weist das Schiebeelement 10 zwei zusammenhängende dreidimensionale Zentrierflächen 24 auf, die sich von jeweils einer der beiden Anschlagflächen 20 erstrecken, wobei die Zentrierflächen 24 jeweils dafür vorgesehen sind, einen Außenflächenbereich des Rohranschlusselements, der in einem Querschnitt rechtwinkelig zu einer zentralen Längsachse des Rohranschlusselements einen kreisförmigen Verlauf aufweist, zentrisch in Bezug auf das Rohr auszurichten. Ferner grenzt an jede der beiden Zentrierflächen 24 eine zusammenhängende dreidimensionale Führungsfläche 26 an, die als Einführschräge vorgesehen ist.

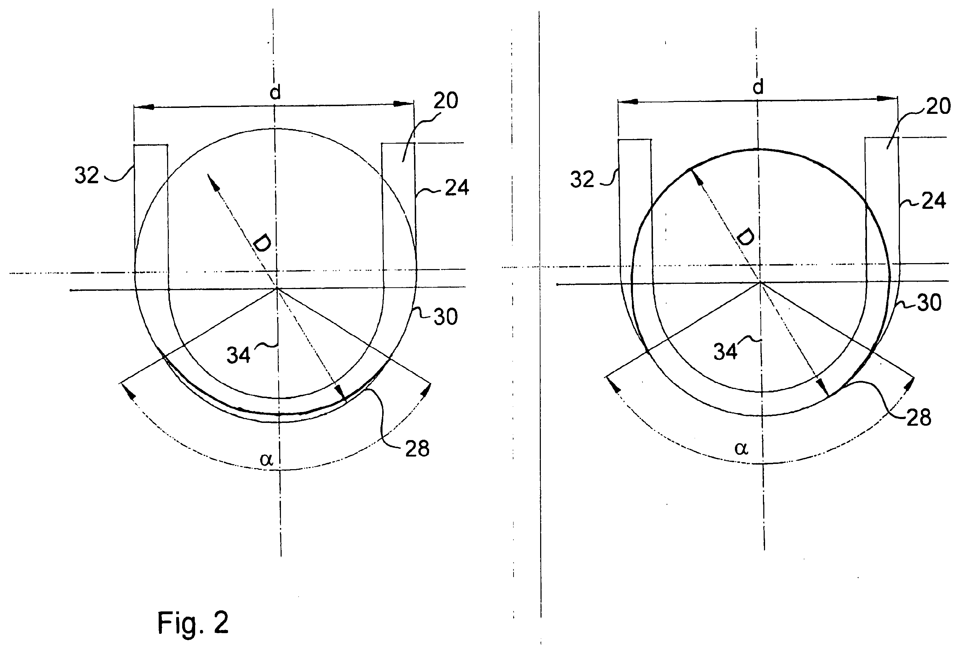

Fig. 2 zeigt zwei schematische Aufsichten auf eine Anschlagfläche 20 eines Schiebeelements 10, aus denen insbesondere der erfindungsgemäße Verlauf der Zentrierfläche 24 in einem Querschnitt rechtwinkelig zu der zentralen Längsachse 14 der zylinderförmigen Öffnung 12 hervorgeht. Der Verlauf der Zentrierfläche 24 umfasst einen kreisbogenförmigen Abschnitt 28, zwei an die jeweiligen Enden des kreisbogenförmigen Abschnitts 28 angrenzende Schenkel 30, die sich von den Enden des kreisbogenförmigen Abschnitts 28 voneinander entfernend erstrecken, und zwei an die jeweiligen Enden der Schenkel 30 angrenzende geradlinige Endschenkel 32, die parallel zueinander und spiegelsymmetrisch zu einer geradlinigen Teilungslinie 34 verlaufen, die den Mittelpunktswinkel α - der in der vorliegenden schematischen Darstellung 120° beträgt - des kreisbogenförmigen Abschnitts 28 in zwei gleich große Teilwinkel aufteilt.

Durch den erfindungsgemäßen Verlauf der Zentrierfläche 24 werden zwei unterschiedliche Zentrierpositionen für Rohranschlusselemente bereitgestellt. Bei einer der beiden Positionen, die für ein Rohranschlusselement vorgesehen ist, bei dem der Außendurchmesser des Abschnitts des Rohranschlusselements, der den zentrisch auszurichtenden Außenflächenbereich aufweist, auf den Durchmesser D des kreisbogenförmigen Abschnitts abgestimmt ist, weist der Außenflächenbereich einen Kontakt zu dem kreisbogenförmigen Abschnitt auf. Diese Position ist in der in Fig. 2 rechts dargestellten Aufsicht mittels eines Kreises, der den auszurichtenden Außenflächenbereich veranschaulicht, dargestellt. Bei der anderen der beiden Positionen, die für ein Rohranschlusselement vorgesehen ist, bei dem der Außendurchmesser des Abschnitts des Rohranschlusselements, der den zentrisch auszurichtenden Außenflächenbereich aufweist, auf den Abstand d der beiden Endschenkel abgestimmt ist, besteht kein Kontakt des Außenflächenbereichs zu dem kreisbogenförmigen Abschnitt. Auch diese Position ist in der in Fig. 2 links dargestellten Aufsicht mittels eines Kreises dargestellt. Typische Unterschiede der Außendurchmesser der Rohranschlusselement-Abschnitte mit den zentrisch auszurichtenden Außenflächenbereichen umfassen beispielsweise nur einige wenige mm, wie es insbesondere bei Schiebehülsen bzw. Presshülsen der Fall sein kann, deren Außendurchmesser sich fertigungstechnisch bedingt meist materialabhängig in der Größenordung einiger weniger mm unterscheiden.

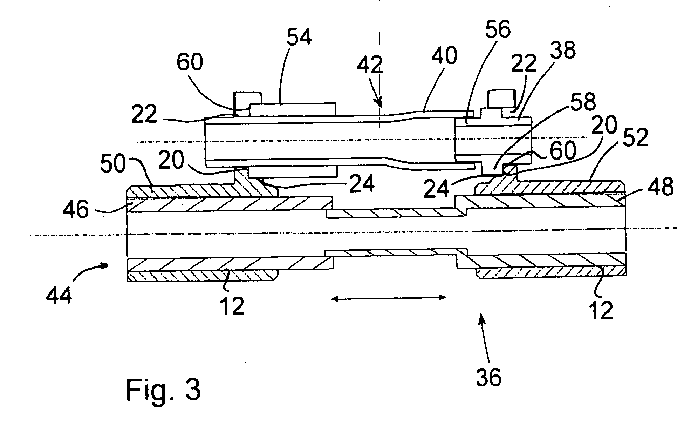

Fig. 3 zeigt eine schematische Querschnittsansicht eines Ausführungsbeispiels eines erfindungsgemäßen Verbindungswerkzeugs 36 zur Schaffung einer Verbindung zwischen einem Rohranschlusselement 38 und einem aufgeweiteten Endabschnitt 40 eines Rohrs 42. Das Verbindungswerkzeug 36 weist ein erstes und ein zweites Schiebeelement 50, 52 und eine Verschiebevorrichtung 44 auf, die ein erstes und ein zweites Element 46, 48 umfasst, die geradlinig in einander verschiebbar sind, wobei ein Abschnitt des ersten Elements 46 in der zylinderförmigen Öffnung 12 des ersten Schiebeelements 50 ortsfest aufgenommen ist, und wobei ein Abschnitt des zweiten Elements 48 in der zylinderförmigen Öffnung 12 des zweiten Schiebeelements 52 ortsfest aufgenommen ist. Das erste Schiebeelement 50 ist dafür vorgesehen, eine Schiebekraft auf eine auf das Rohr 42 aufgeschobene Schiebehülse 54 zu übertragen, um diese auf den aufgeweiteten Endabschnitt 40 zu schieben. Das zweite Schiebeelement 52 ist dafür vorgesehen, eine Schiebekraft auf das Rohranschlusselement 38 zu übertragen, um einen Endabschnitt 56 des Rohranschlusselements 38, der an einen Fittingkragen 58 des Rohranschlusselements 38 angrenzt, in den aufgeweiteten Endabschnitt 40 des Rohrs 42 hineinzuschieben. Ferner ist eine nicht näher dargestellte Verschiebeeinheit vorgesehen, die an die Verschiebevorrichtung 44 gekoppelt ist, wobei die Verschiebeinheit dazu eingerichtet ist, die beiden Elemente 46, 48 zur Schaffung der Verbindung aufeinander zu zu bewegen

Aus der Fig. 3 ist insbesondere ersichtlich, dass das Rohranschlusselement eine an dem Fittingkragen 58 ausgebildete Kraftübertragungsfläche 60 aufweist, die zur Schiebkraftübertragung an der Anschlagfläche 20 des zweiten Schiebeelements 52 anliegt. Ferner liegt eine Kraftübertragungsfläche 60 der Schiebehülse 54, die in Form einer Stirnseite der Schiebehülse 54 ausgebildet ist, an der Anschlagfläche 20 des ersten Schiebeelements 50 an.

Ferner ist aus der Fig. 3 ersichtlich, dass in der Aussparung 22 der Anschlagfläche 20 des ersten Schiebeelements 50 ein Rohrabschnitt angeordnet ist, während in der Aussparung 22 der Anschlagfläche 20 des zweiten Schiebeelements 52 ein Abschnitts des Rohranschlusselements 38 angeordnet ist, der an zu zentrierenden Außenflächenbereich in Form der an dem Fittingkragen 58 ausgebildeten Mantelfläche angrenzt. Der zu zentrierende Außenflächenbereich der Schiebehülse 54 umfasst einen Endabschnitt der Mantelfläche der Schiebehülse 54.

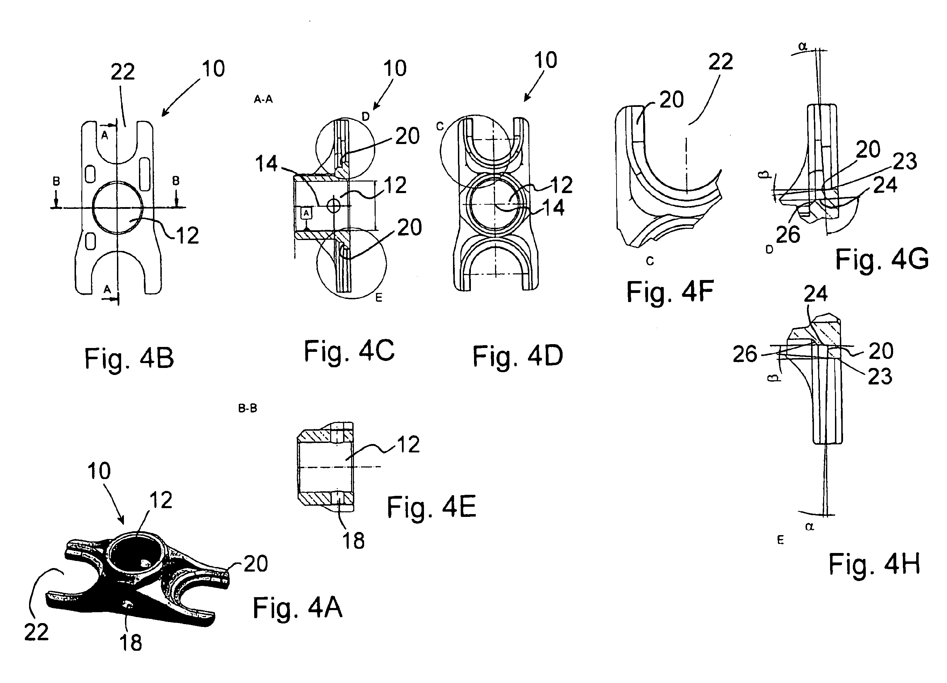

Die Fig. 4A bis 4H umfassen-Darstellungen eines Ausführungsbeispiel eines erfindungsgemäßen Schiebeelements 10, das zwei Anschlagflächen 20 aufweist, wobei Fig. 4A eine dreidimensionale Darstellung des Schiebeelements 10 zeigt. Die Fig. 4B zeigt eine Unteransicht auf das Schiebeelement 10 und die Fig. 4D zeigt eine Aufsicht auf das Schiebeelement 10. Fig. 4C zeigt eine Schnittansicht entlang der Linie A-A in Fig. 4B und Fig. 4E zeigt eine Schnittansicht entlang der Linie B-B in Fig. 4B. Fig. 4F, 4G und 4H zeigten vergrößerte Detaildarstellungen der Details C, D und E in Fig. 4C und Fig. 4D.

Wie der Fig. 4C und insbesondere auch den Fig. 4G und 4H zu entnehmen, ist die Anschlagfläche 20 nicht unter einem Winkel von 90° zur der Zentrierfläche 24 angeordnet, sondern unter einem Winkel von 90° abzüglich eines Neigungswinkels α, der vorliegend ca. 2,5° beträgt. Die so bereitgestellte Neigung kann übermäßigen Dehnungen bzw. Verbiegungen des Schiebeelements 10, welches meist hohe Schiebekräfte überträgt, derart vorgebeugt werden, dass infolge der erfindungemäßen Neigung nach Aufnahme des jeweiligen Rohranschlusselements 38 eine Vorspannung in dem Schiebeelement 10 bereitgestellt wird, die nachteiligen übermäßigen Dehnungen bzw. Verbiegungen während der Übertragung der Schiebekraft entgegenwirkt. Ferner ist ein Randbereich der Wandung 23, welche die Aussparung 22 begrenzt, mit einer Fase bzw. Schräge versehen, die vorliegend unter einem Winkel β zu einem zentralen Bereich der Wandung angeordnet ist, der vorliegend ca. 5° beträgt, aber auch innerhalb eines Bereichs von 1° bis 45° liegen kann.

Die Fase dient erfindungsgemäß der wirksamen Vermeidung von Pressspuren bzw. Schleifspuren auf der jeweiligen Rohroberfläche, insbesondere beim Aufschieben einer Schiebehülse 54 auf einen aufgeweiteten Endabschnitt 40 (vgl. auch Fig. 3).

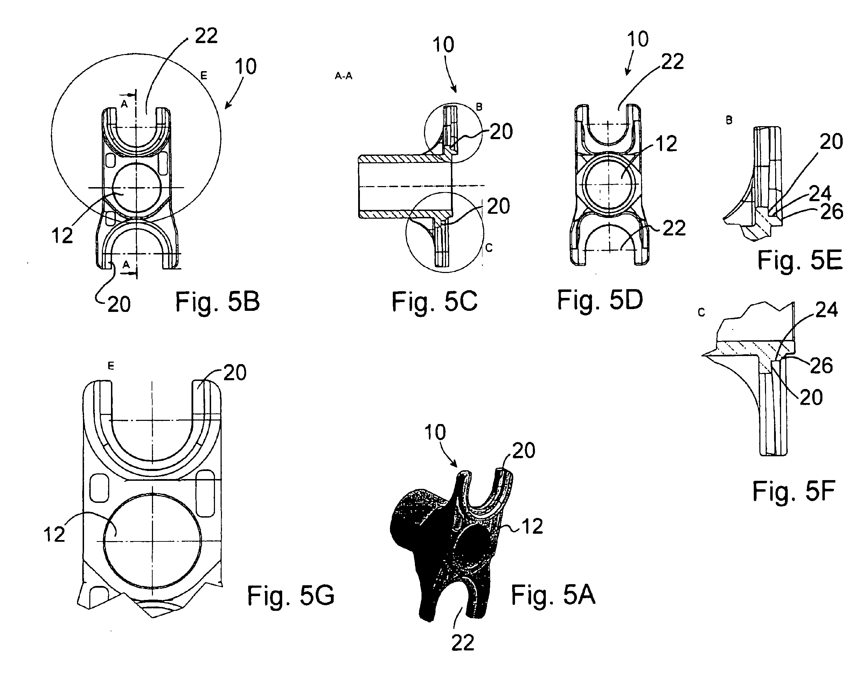

Die Fig. 5A bis 5G umfassen Darstellungen eines weiteren Ausführungsbeispiels eines erfindungsgemäßen Schiebeelements 10, das zwei Anschlagflächen 20 aufweist, wobei Fig. 5A eine dreidimensionale Darstellung des Schiebeelements 10 zeigt. Die Fig. 5B zeigt eine Aufsicht auf das Schiebeelement 10 und die Fig. 5D zeigt eine Unteransicht des Schiebeelements 10. Fig. 5C zeigt eine Schnittansicht entlang der Linie A-A in Fig. 5B und Fig. 5E, 5F und 5G zeigten vergrößerte Detaildarstellungen der Details B,C und E der Fig. 5C und Fig. 5B. Wie insbesondere auch Fig. 5F zu entnehmen ist auch hier eine Anschlagfläche 20 vorgesehen, die zur Zentrierfläche 24 hin abfallend ausgebildet ist.

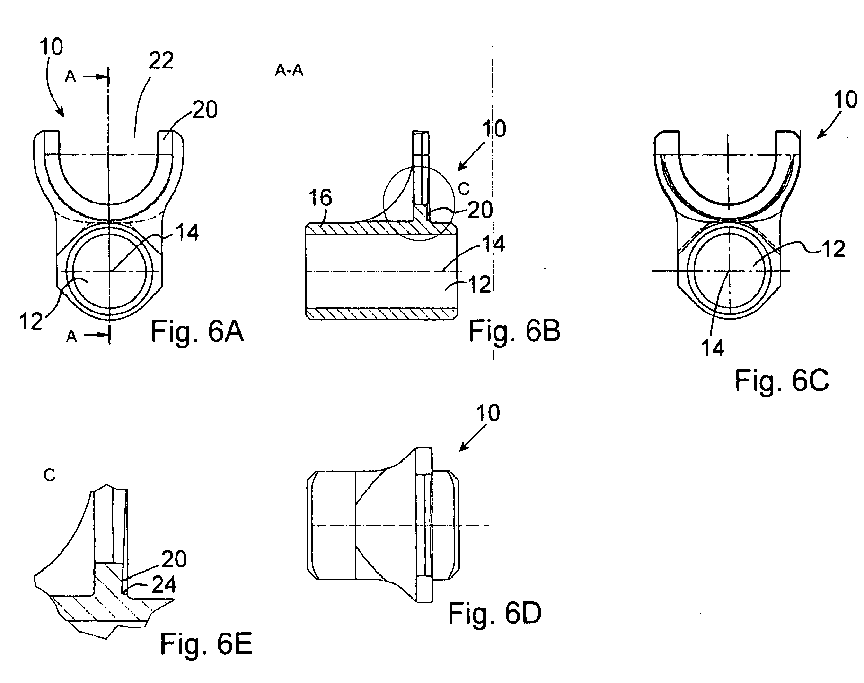

Die Fig. 6A bis 6E umfassen Darstellungen eines Schiebeelements 10 mit einer Anschlagfläche 20, wobei Fig. 6A eine Aufsicht, Fig. 6B eine Schnittansicht entlang der Schnittlinie A-A der Fig. 6A, Fig 6C eine Unteransicht und Fig.6D eine Seitenansicht ist. Fig. 6E zeigt eine vergrößerte Detailansicht des Details C der Fig. 6B. Auch hier ist, insbesondere auch um eine wirksame Zentrierung des jeweiligen Rohranschlusselements zu erleichtern und nachteilige Dehnungen bzw. Biegungen zu vermeiden, eine geneigte Anschlagfläche 20 vorgesehen.

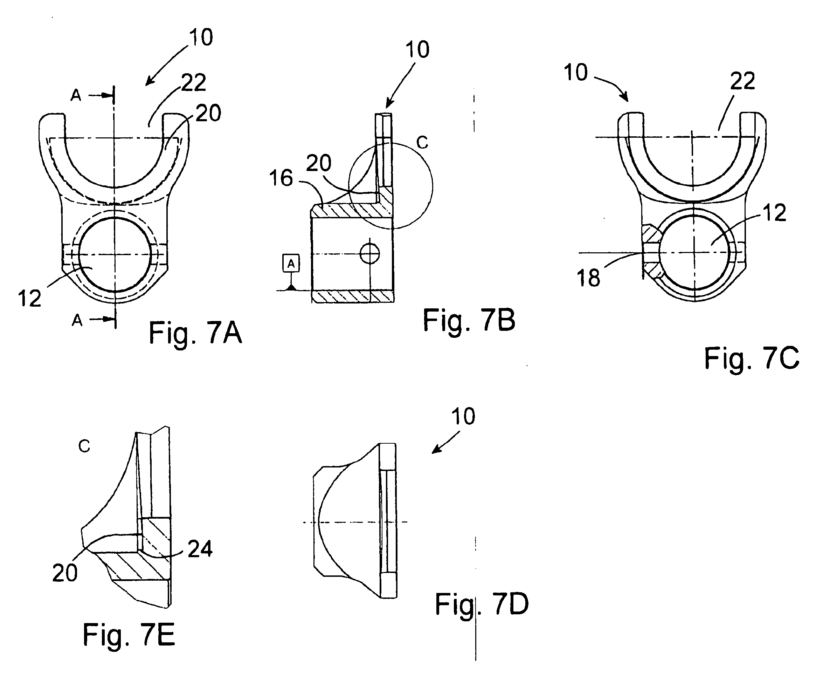

Die Fig. 7A bis 7E umfassen Darstellungen eines Schiebeelements 10 mit einer Anschlagfläche 20, wobei Fig. 7A eine Aufsicht, Fig. 7B eine Schnittansicht entlang der Schnittlinie A-A der Fig. 7A, Fig. 7C eine Unteransicht und Fig. 7D eine Seitenansicht ist. Fig. 7E zeigt eine vergrößerte Detailansicht des Details C der Fig. 7B. Das dargestellte Schiebeelement 10 unterscheidet sich von dem mittels der Fig. 6A bis 6E dargestellten Schiebeelement 10 durch die Position der Anschlagfläche 20, die vorliegend an die Außenwand 16 bzw. Außenwandung der kreiszylinderförmigen Öffnung 12, die in Form eines geraden Kreiszylinders ausgebildet ist, angrenzt.

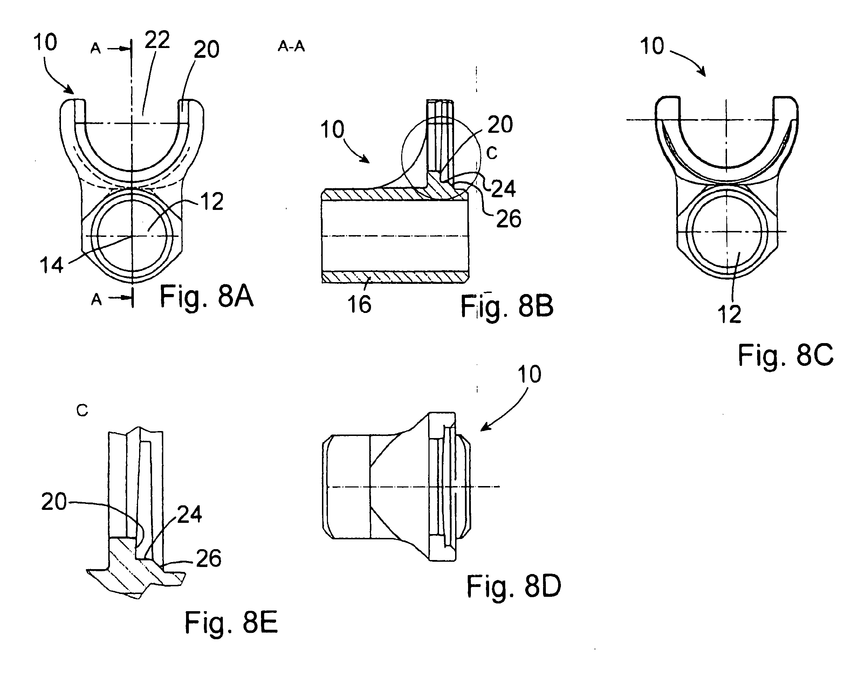

Die Fig. 8A bis 8E umfassen Darstellungen eines Schiebeelements 10 mit einer Anschlagfläche 20, wobei Fig. 8A eine Aufsicht, Fig. 8B eine Schnittansicht entlang der Schnittlinie A-A der Fig. 8A, Fig. 8C eine Unteransicht und Fig. 8D eine Seitenansicht ist. Fig. 8E zeigt eine vergrößerte Detailansicht des Details C der Fig. 8B. Das hier dargestellte Schiebeelement weist im Unterschied zu den Schiebeelementen der Fig. 6A bis 6E und 7A bis 7E zusätzlich zu der Anschlagfläche 20 eine Führungsfläche 26 auf, die an die Zentrierfläche 24 angrenzt.

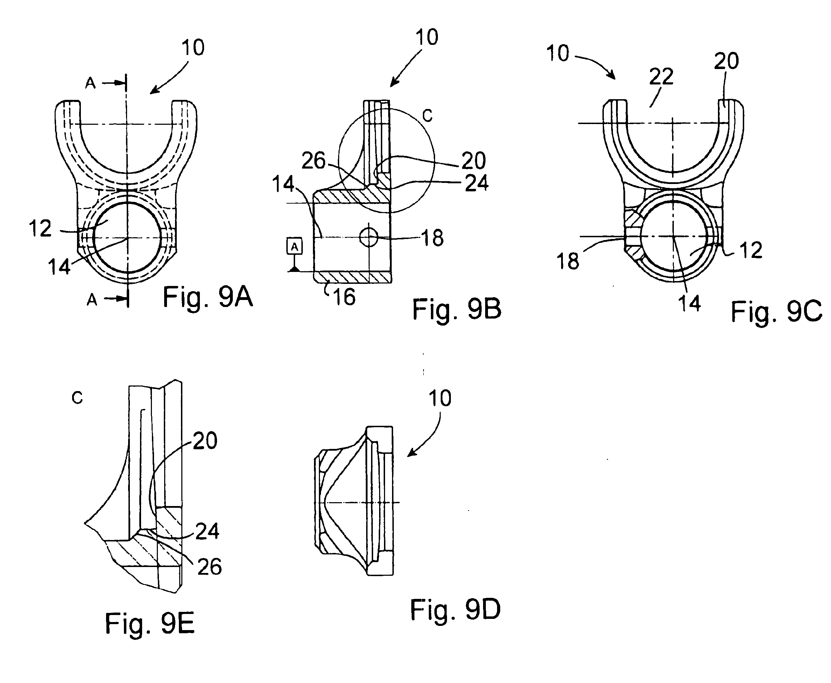

Die Fig. 9A bis 9E umfassen Darstellungen eines Schiebeelements 10 mit einer Anschlagfläche 20, wobei Fig. 9A eine Aufsicht, Fig. 9B eine Schnittansicht entlang der Schnittlinie A-A der Fig. 9A, Fig. 9C eine Unteransicht und Fig. 9D eine Seitenansicht ist. Fig. 9E zeigt eine vergrößerte Detailansicht des Details C der Fig. 9B Das hier dargestellte Schiebeelement 10 unterscheidet sich von dem mittels der Fig. 8A bis 8E dargestellten Schiebeelement 10 durch die Position der Führungsfläche 26, die vorliegend an den Außenwandbereich der kreiszylinderförmigen Öffnung 12 angrenzt.

### Bezugszeichenliste

- 10: Schiebeelement
- 12: Öffnung Schiebeelement
- 14: zentrale Längsachse
- 16: Wandung
- 18: Durchgangsöffnung
- 20: Anschlagfläche
- 22: Aussparung
- 23: Wandung
- 24: Zentrierfläche
- 26: Führungsfläche
- 28: kreisbogenförmiger Abschnitt
- 30: Schenkel
- 32: Endschenkel
- 34: Teilungslinie
- 36: Verbindungswerkzeug
- 38: Rohranschlusselement
- 40: Rohr-Endabschnitt
- 42: Rohr
- 44: Verschiebevorrichtung
- 46: erstes Element
- 48: zweites Element
- 50: erstes Schiebeelement
- 52: zweites Schiebeelement
- 54: Schiebehülse
- 56: Endabschnitt Rohranschlusselement
- 58: Fittingkragen
- 60: Kraftübertragungsfläche

## Patentansprüche

1. Schiebeelement (10) zur Übertragung einer Schiebekraft auf ein Rohranschlusselement (38), wobei das Rohranschlusselement (38) dafür vorgesehen ist, wenigstens abschnittsweise auf einen Rohrbereich eines Rohrs (42) aufgeschoben zu werden oder wenigstens abschnittsweise in das Rohr (42) hineingeschoben zu werden,
- wobei das Schiebeelement (10) eine zylinderförmige Öffnung (12) mit einer zentralen Längsachse (14) aufweist,
- wobei das Schiebeelement (10) wenigstens eine Anschlagfläche (20) mit einer Aussparung (22) aufweist, wobei die Aussparung (22) zur Anordnung eines Abschnitts des Rohres (42) in der Aussparung (22) oder zur Anordnung eines Abschnitts des Rohranschlusselements (38) in der Aussparung (22) vorgesehen ist,
- und wobei das Schiebeelement (10) wenigstens eine sich von der Anschlagfläche (20) erstreckende dreidimensionale Zentrierfläche (24) aufweist, die dafür vorgesehen ist, einen Außenflächenbereich des Rohranschlusselements (38), der in einem Querschnitt rechtwinkelig zu einer zentralen Längsachse des Rohranschlusselements (38) einen kreisförmigen Verlauf aufweist, zentrisch in Bezug auf das Rohr (42) auszurichten,
- wobei die Zentrierfläche (24) in einem Querschnitt rechtwinkelig zu der zentralen Längsachse (14) der zylinderförmigen Öffnung (12) einen Verlauf aufweist, der einen kreisbogenförmigen Abschnitt (28), zwei an die jeweiligen Enden des kreisbogenförmigen Abschnitts (28) angrenzende Schenkel (30), die sich von den Enden des kreisbogenförmigen Abschnitts (28) voneinander entfernend erstrecken, und zwei an die jeweiligen Enden der Schenkel (30) angrenzende geradlinige Endschenkel (32) aufweist, die parallel zueinander und spiegelsymmetrisch zu einer geradlinigen Teilungslinie (34) verlaufen, die den Mittelpunktswinkel des kreisbogenförmigen Abschnitts (28) in zwei gleich große Teilwinkel aufteilt.

2. Schiebeelement (10) nach Anspruch 1, **dadurch gekennzeichnet, dass** der Mittelpunktswinkel eine Größe aufweist, die innerhalb eines Bereichs von 70° bis 170° liegt.

3. Schiebeelement (10) nach Anspruch 1 oder 2, **dadurch gekennzeichnet, dass** die Endschenkel (32) einen Abstand zueinander aufweisen, der innerhalb eines Bereichs von 8 mm bis 250 mm liegt.

4. Schiebeelement (10) nach einem der vorangehenden Ansprüche, **dadurch gekennzeichnet, dass** der kreisbogenförmige Abschnitt (28) eines Radius aufweist, der innerhalb eines Bereichs von 4 mm bis 125 mm liegt.

5. Schiebeelement (10) nach einem der vorangehenden Ansprüche, **dadurch gekennzeichnet, dass** die parallelen Endschenkel (32) eine Länge aufweisen, die innerhalb eines Bereichs von 2 mm bis 100 mm liegt.

6. Schiebeelement (10) nach einem der vorangehenden Ansprüche, **dadurch gekennzeichnet, dass** jeder der beiden Schenkel (30), die an die jeweiligen Enden des kreisbogenförmigen Abschnitts (28) angrenzen, eine Länge aufweist, die innerhalb eines Bereichs von 1 mm bis 70 mm liegt.

7. Schiebeelement (10) nach einem der vorangehenden Ansprüche, **dadurch gekennzeichnet, dass** die Zentrierfläche (24) rechtwinkelig zu der Anschlagfläche (20) angeordnet ist.

8. Schiebeelement (10) nach einem der Ansprüche 1 bis 6, **dadurch gekennzeichnet, dass** die Anschlagfläche (20) wenigstens einen Bereich mit einer Normalen aufweist, wobei die Normale des Bereichs mit einer Normalen zu der Zentrierfläche (24) einen Winkel einschließt , der innerhalb eines Bereichs von 85° bis 90° oder innerhalb eines Bereichs von 87° bis 90° liegt.

9. Schiebeelement (10) nach einem der vorangehenden Ansprüche, **dadurch gekennzeichnet, dass** das Schiebeelement (10) wenigstens eine dreidimensionale Führungsfläche (26) aufweist, die als Einführschräge vorgesehen ist, wobei die Führungsfläche (26) vorzugsweise entlang des gesamten Verlaufs der Zentrierfläche (24) an diese angrenzt.

10. Schiebeelement (10) nach Anspruch 9, **dadurch gekennzeichnet, dass** eine Normale der Führungsfläche (26) mit einer Normalen der Zentrierfläche (24) einen spitzen Winkel einschließt, der innerhalb eines Bereichs von 3° bis 89° liegt oder innerhalb eines Bereichs von 30° bis 45° liegt.

11. Verbindungswerkzeug (36) zur Schaffung einer Verbindung zwischen einem Rohranschlusselement (38) und einem aufgeweiteten Endabschnitt (40) eines Rohrs (42), wobei bei der Verbindung eine Schiebhülse (54) auf den aufgeweiteten Endabschnitt (40) aufgeschoben und wenigstens ein Endabschnitt (56) des Rohranschlusselements (38) in den aufgeweiteten Endabschnitt (40) des Rohrs (42) hineingeschoben ist,
wobei das Verbindungswerkzeug (36) ein erstes und ein zweites Schiebeelement (50, 52) nach einem der Ansprüche 1 bis 10 und eine Verschiebevorrichtung (44) aufweist, die ein erstes und ein zweites Element (46, 48) umfasst, die geradlinig voneinander weg und aufeinander zu verschiebbar sind, wobei ein Abschnitt des ersten Elements (46) in der zylinderförmigen Öffnung (12) des ersten Schiebeelements (50) ortsfest aufgenommen ist, und wobei ein Abschnitt des zweiten Elements (48) in der zylinderförmigen Öffnung (12) des zweiten Schiebeelements (52) ortsfest aufgenommen ist, und wobei das erste Schiebeelement (50) dafür vorgesehen ist, eine Schiebkraft auf die auf das Rohr (42) aufgeschobene Schiebehülse (54) zu übertragen, um diese auf den aufgeweiteten Endabschnitt (40) zu schieben, und wobei das zweite Schiebeelement (52) dafür vorgesehen ist, eine Schiebekraft auf das Rohranschlusselement (38) zu übertragen, um wenigstens einen Endabschnitt (56) des Rohranschlusselements (38) in den aufgeweiteten Endabschnitt (40) des Rohrs (42) hineinzuschieben, wobei ferner eine an die Verschiebevorrichtung (44) gekoppelte Verschiebeeinheit vorgesehen ist, die dazu eingerichtet ist, das erste und das zweite Element (46, 48) zur Schaffung der Verbindung aufeinander zu zu bewegen.

## Claims

1. Sliding element (10) for transmitting a sliding force to a pipe connection element (38), wherein the pipe connection element (38) is provided to be pushed at least partly onto a pipe region of a pipe (42) or to be pushed at least partly into the pipe (42),
- wherein the sliding element (10) has a cylindrical opening (12) having a central longitudinal axis (14),
- wherein the sliding element (10) has at least one abutment surface (20) having a cutout (22), wherein the cutout (22) is provided to arrange a portion of the pipe (42) in the cutout (22) or to arrange a portion of the pipe connection element (38) in the cutout (22)
- and wherein the sliding element (10) has at least one three-dimensional centring surface (24) which extends from the abutment surface (20) and is provided to orient an outer surface region of the pipe connection element (38) centrally with respect to the pipe (42), said outer surface region having a circular profile in a cross section at right angles to a central longitudinal axis of the pipe connection element (38),
- wherein the centring surface (24) has, in a cross section at right angles to the central longitudinal axis (14) of the cylindrical opening (12), a profile having a circularly arcuate portion (28), two limbs (30) which adjoin the respective ends of the circularly arcuate portion (28) and extend from the ends of the circularly arcuate portion (28) and away from one another, and two rectilinear end limbs (32), which adjoin the respective ends of the limbs (30), extend parallel to one another and in a mirror-symmetrical manner to a rectilinear dividing line (34) which divides the central angle of the circularly arcuate portion (28) into two part angles of equal size.

2. Sliding element (10) according to Claim 1, **characterized in that** the central angle has a magnitude which is within a range of from 70° to 170°.

3. Sliding element (10) according to Claim 1 or 2, **characterized in that** the end limbs (32) are at a distance from one another which is within a range of from 8 mm to 250 mm.

4. Sliding element (10) according to any one of the preceding claims, **characterized in that** the circularly arcuate portion (28) has a radius which is within a range of from 4 mm to 125 mm.

5. Sliding element (10) according to any one of the preceding claims, **characterized in that** the parallel end limbs (32) have a length which is within a range of from 2 mm to 100 mm.

6. Sliding element (10) according to any one of the preceding claims, **characterized in that** each of the two limbs (30) which adjoin the respective ends of the circularly arcuate portion (28) has a length which is within a range of from 1 mm to 70 mm.

7. Sliding element (10) according to any one of the preceding claims, **characterized in that** the centring surface (24) is arranged at right angles to the abutment surface (20).

8. Sliding element (10) according to any one of Claims 1 to 6, **characterized in that** the abutment surface (20) has at least one region having a normal, wherein the normal to the region encloses an angle with a normal to the centring surface (24), said angle being within a range of from 85° to 90° or within a range of from 87° to 90°.

9. Sliding element (10) according to any one of the preceding claims, **characterized in that** the sliding element (10) has at least one three-dimensional guide surface (26) which is provided as an introduction slope, wherein the guide surface (26) preferably adjoins the centring surface (24) along the entire profile thereof.

10. Sliding element (10) according to Claim 9, **characterized in that** a normal of the guide surface (26) encloses an acute angle with a normal of the centring surface (24), said angle being within a range of from 3° to 89° or within a range of from 30° to 45°.

11. Connecting tool (36) for creating a connection between a pipe connection element (38) and a widened end portion (40) of a pipe (42), wherein for the connection a sliding sleeve (54) is pushed onto the widened end portion (40) and at least an end portion (56) of the pipe connection element (38) is pushed into the widened end portion (40) of the pipe (42), wherein the connecting tool (36) has a first and a second sliding element (50, 52) according to any one of Claims 1 to 10 and a displacing apparatus (44) which comprises a first and a second element (46, 48) which are intended to be slidable away from and towards one another, wherein a portion of the first element (46) is received in a stationary manner in the cylindrical opening (12) in the first sliding element (50), and wherein a portion of the second element (48) is received in a stationary manner in the cylindrical opening (12) in the second sliding element (52), and wherein the first sliding element (50) is provided to transmit a sliding force to the sliding sleeve (54) pushed onto the pipe (42), in order to push said sliding sleeve (54) onto the widened end portion (40), and wherein the second sliding element (52) is provided to transmit a sliding force to the pipe connection element (38) in order to push at least an end portion (56) of the pipe connection element (38) into the widened end portion (40) of the pipe (42), wherein there is also provided a displacing unit which is coupled to the displacing apparatus (44) and is designed to move the first and the second element (46, 48) towards one another in order to create the connection.

## Revendications

1. Elément coulissant (10) pour transférer une force de coulissement à un élément de raccord de tuyau (38), l'élément de raccord de tuyau (38) étant prévu pour être enfilé au moins en partie sur une région tubulaire d'un tuyau (42) ou pour être enfoncé au moins en partie à l'intérieur du tuyau (42),
- l'élément coulissant (10) présentant une ouverture cylindrique (12) avec un axe longitudinal central (14),
- l'élément coulissant (10) présentant au moins une surface de butée (20) avec un évidement (22), l'évidement (22) étant prévu pour recevoir une portion du tuyau (42) ou pour recevoir une portion de l'élément de raccord de tuyau (38),
- et l'élément coulissant (10) présentant au moins une surface de centrage (24) tridimensionnelle s'étendant depuis la surface de butée (20), qui est prévue pour aligner centralement par rapport au tuyau (42) une région de surface extérieure de l'élément de raccord de tuyau (38) qui présente une allure circulaire dans une section transversale à angle droit par rapport à un axe longitudinal central de l'élément de raccord de tuyau (38),
- la surface de centrage (24), dans une section transversale à angle droit par rapport à l'axe longitudinal central (14) de l'ouverture cylindrique (12), présentant une allure qui présente une portion en forme d'arc de cercle (28), deux branches (30) adjacentes aux extrémités respectives de la portion en forme d'arc de cercle (28), qui s'étendent en s'éloignant l'une de l'autre depuis les extrémités de la portion en forme d'arc de cercle (28), et deux branches d'extrémité (32) rectilignes adjacentes aux extrémités respectives des branches (30), qui s'étendent parallèlement l'une à l'autre et avec une symétrie spéculaire par rapport à une ligne de division rectiligne (34) qui divise l'angle au centre de la portion en forme d'arc de cercle (28) en deux angles partiels identiques.

2. Elément coulissant (10) selon la revendication 1, **caractérisé en ce que** l'angle au centre présente une valeur comprise dans une plage de 70° à 170°.

3. Elément coulissant (10) selon la revendication 1 ou 2, **caractérisé en ce que** les branches d'extrémité (32) sont à une distance l'une de l'autre qui est comprise dans une plage de 8 mm à 250 mm.

4. Elément coulissant (10) selon l'une quelconque des revendications précédentes, **caractérisé en ce que** la portion en forme d'arc de cercle (28) présente un rayon qui est compris dans une plage de 4 mm à 125 mm.

5. Elément coulissant (10) selon l'une quelconque des revendications précédentes, **caractérisé en ce que** les branches d'extrémité parallèles (32) présentent une longueur qui est comprise dans une plage de 2 mm à 100 mm.

6. Elément coulissant (10) selon l'une quelconque des revendications précédentes, **caractérisé en ce que** chacune des deux branches (30) qui sont adjacentes aux extrémités respectives de la portion en forme d'arc de cercle (28), présente une longueur qui est comprise dans une plage de 1 mm à 70 mm.

7. Elément coulissant (10) selon l'une quelconque des revendications précédentes, **caractérisé en ce que** la surface de centrage (24) est disposée à angle droit par rapport à la surface de butée (20).

8. Elément coulissant (10) selon l'une quelconque des revendications 1 à 6, **caractérisé en ce que** la surface de butée (20) présente au moins une région avec une normale, la normale de la région formant avec une normale à la surface de centrage (24) un angle qui est compris dans une plage de 85° à 90°, ou dans une plage de 87° à 90°.

9. Elément coulissant (10) selon l'une quelconque des revendications précédentes, **caractérisé en ce que** l'élément coulissant (10) présente au moins une surface de guidage tridimensionnelle (26), qui est prévue sous forme de biseau d'insertion, la surface de guidage (26) étant de préférence adjacente à la surface de centrage (24) le long de toute l'étendue de cette dernière.

10. Elément coulissant (10) selon la revendication 9, **caractérisé en ce qu'**une normale de la surface de guidage (26) forme avec la normale de la surface de centrage (24) un angle aigu qui est compris dans une plage de 3° à 89°, ou dans une plage de 30° à 45°.

11. Outil d'assemblage (36) pour créer une liaison entre un élément de raccord de tuyau (38) et une portion d'extrémité élargie (40) d'un tuyau (42), dans lequel lors de la liaison, un manchon coulissant (54) est enfilé sur la portion d'extrémité élargie (40) et au moins une portion d'extrémité (56) de l'élément de raccord de tuyau (38) est enfoncée dans la portion d'extrémité élargie (40) du tuyau (42), l'outil d'assemblage (36) présentant un premier et un deuxième élément coulissant (50, 52) selon l'une quelconque des revendications 1 à 10, et un dispositif coulissant (44) qui comprend un premier et un deuxième élément (46, 48) qui peuvent être déplacés de manière rectiligne à l'écart l'un de l'autre et l'un vers l'autre, une portion du premier élément (46) étant reçue fixement dans l'ouverture cylindrique (12) du premier élément coulissant (50), et une portion du deuxième élément (48) étant reçue fixement dans l'ouverture cylindrique (12) du deuxième élément coulissant (52), et le premier élément coulissant (50) étant prévu pour transférer une force de coulissement au manchon coulissant (54) enfilé sur le tuyau (42), afin de faire coulisser celui-ci sur la portion d'extrémité élargie (40), et le deuxième élément coulissant (52) étant prévu pour transférer une force de coulissement à l'élément de raccord de tuyau (38), afin d'enfoncer au moins une portion d'extrémité (56) de l'élément de raccord de tuyau (38) dans la portion d'extrémité élargie (40) du tuyau (42), une unité coulissante accouplée au dispositif coulissant (44) étant en outre prévue et conçue pour déplacer l'un vers l'autre le premier et le deuxième élément (46, 48) pour réaliser la liaison.
